# EUROPÄISCHE PATENTANMELDUNG

(11) **EP 0 560 236 A2**
(43) Veröffentlichungstag der Anmeldung: **15.09.1993**
(21) Anmeldenummer: 93103615.6
(22) Anmeldetag: 06.03.1993
(51) Int. Cl.: H04M 19/00

(54) **Verfahren und Schaltungsanordnung zur Übertragung digitaler Signale über Teilnehmerleitungen**

(30) Priorität: 13.03.1992 DE 4207985
(71) Anmelder: Alcatel SEL Aktiengesellschaft, D-70435 Stuttgart (DE)
(72) Erfinder: Zanzig, Hans-Jürgen, W-7252 Weil der Stadt (DE)
(74) Vertreter: Pohl, Herbert, Dipl.-Ing

(57) **Zusammenfassung**

Es ist bekannt, eine in der Vermittlungszentrale befindliche Konstantstromquelle, die den Speisestrom von Endgeräten regelt, mit digitalen Signalen zu modulieren. Um digitale Signale auch dann übertragen zu können, wenn Endgeräte mit interner Stromregelung eingesetzt werden, wird eine universell einsetzbare Speiseschaltung (4) angegeben, deren Spannung über eine Steuerschaltung (5) mit einem digitalen Signal moduliert wird.

Die Schaltungsanordnung ist unabhängig vom Ort einer im Speisestromkreis vorhandenen Stromregelschaltung anwendbar und insbesondere zum Einsatz an der SO-Schnittstelle eines ISDN-Anschlusses geeignet.

## Beschreibung

Die Erfindung betrifft ein Verfahren und eine Schaltungsanordnung zur Übertragung digitaler Signale über Teilnehmerleitungen in Fernsprechanlagen. Üblicherweise werden über die Teilnehmerleitung sowohl Nachrichten als auch Speiseströme zur Stromversorgung der Endgeräte übertragen. Um in modernen Fernsprechanlagen den Speisestrom unabhängig von der Länge der Teilnehmeranschlußleitung und dem Eingangswiderstand der Endgeräte auf einem Nennwert konstant zu halten und den Leistungsumsatz zu minimieren, werden im Speisestromkreis steuerbare Konstantstromquellen eingesetzt. Es ist bereits bekannt, diese Konstantstromquellen mit einem digitalen Signal zu modulieren und somit Speisestrom und digitales Signal gemeinsam zu übertragen, vgl. DE 39 26 102. Diese Lösung setzt aber voraus, daß sich die Konstantstromquelle in der Vermittlungszentrale befindet, sie versagt jedoch, wenn in den Endgeräten Stromversorgungswandler oder Speiseschaltungen mit interner Stromregelung vorhanden sind. In diesem Falle wären bei der angegebenen Lösung mindestens zwei Regelschaltungen im Speisestromkreis vorhanden, die sich gegenseitig stören würden.

Der Erfindung liegt die Aufgabe zugrunde, ein Verfahren anzugeben, das diesen Nachteil beseitigt. Dazu sind auch die schaltungstechnischen Lösungen anzugeben.

Diese Aufgabe wird erfindungsgemäß durch die im Patentanspruch 1 angegebene Lehre gelöst. Zur Realisierung des Verfahrens wird gemäß Patentanspruch 2 eine Schaltungsanordnung angegeben, bei der durch Anschaltung eines einfachen Steuerorgans die Speisespannung so moduliert werden kann, daß digitale Steuer-, Takt- oder Synchronisierungssignale erdsymmetrisch zum Endgerät gesendet werden können. Durch die erdsymmetrische Einspeisung der digitalen Signale wird in vorteilhafter Weise ein störungsfreier Empfang der digitalen Signale auch bei starker Längsspannungsbeeinflussung auf der Leitung erzielt. Die Schaltungsanordnung ist bei gleichem Aufbau für unterschiedliche Einsatzfälle geeignet und zeichnet sich durch ihre Universalität und ihren einfachen Aufbau aus.

Die Erfindung wird nachstehend an einem Ausführungsbeispiel erläutert. In der dazugehörigen Zeichnung zeigen
- Fig. 1: ein Schaltbild der erfindungsgemäßen Schaltungsanordnung mit Teilnehmerleitung und Endgerät,
- Fig. 2: ein Schaltbild der erfindungsgemäßen Schaltungsanordnung mit Stromregelschaltung,

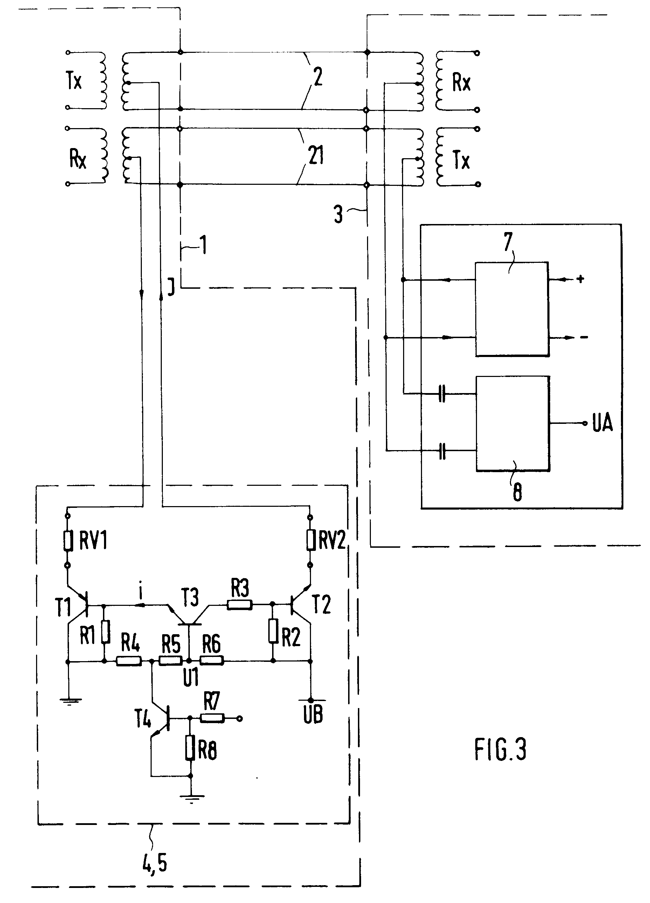

- Fig. 3: ein Schaltbild der erfindungsgemäßen Schaltungsanordnung beim Einsatz an einer SO-Schnittstelle eines ISDN-Basisanschlusses.

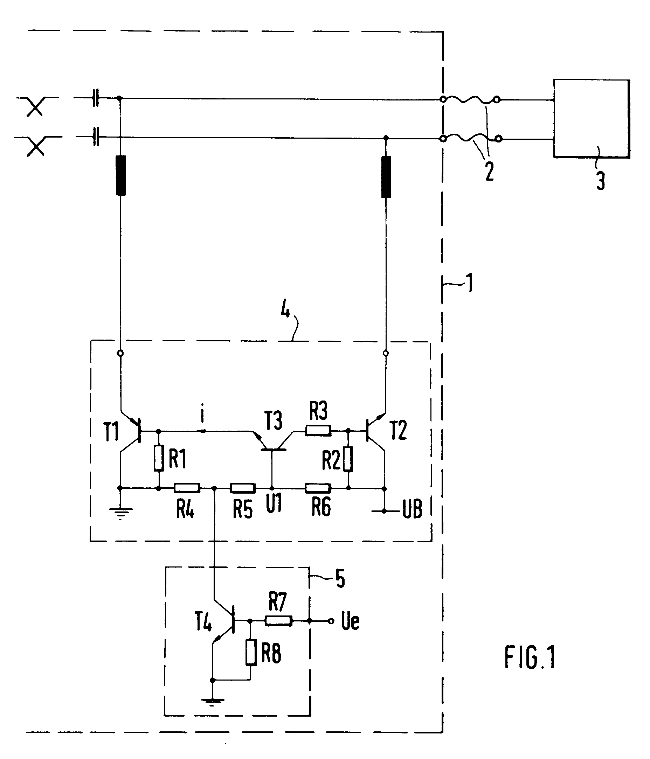

Gemäß Fig. 1 besteht die Schaltungsanordnung aus einer schematisch dargestellten Vermittlungsanlage 1, einem über die a/b-Adern der Teilnehmerleitung 2 angeschlossenen Empfänger 3 und einer Speiseschaltung 4 mit einer Steuerschaltung 5, die sich beide in der Vermittlungsanlage 1 befinden. Die Speiseschaltung 4 besteht aus einer Stromquellenschaltung mit einem Transistor T3 und drei Widerständen R1, R2, R3 im Kollektor-Emitter-Kreis sowie einem Basisspannungsteiler aus drei in Reihe geschalteten Widerständen R4, R5, R6. Außerdem enthält die Speiseschaltung 4 zwei Leistungstransistoren T1, T2 entgegengesetzten Leitfähigkeitstyps, die im Speisestromkreis eingeschleift sind und zu deren Basis-Kollektor-Strecken jeweils ein Widerstand R1, R2 der Stromquellenschaltung parallel liegt. Die Steuerschaltung 5 besteht aus einem Transistor T4 und zwei Widerständen R7 und R8. Der Kollektor des Transistors T4 der Steuerschaltung 5 ist an den Widerstand R4 und den ersten Anschluß des Widerstandes R5 des Basisspannungsteilers geschaltet und die Basis des Transistors T3 der Stromquellenschaltung ist mit dem zweiten Anschluß des Widerstandes R5 und mit dem Widerstand R6 des Basisspannungsteilers verbunden.

Im unmodulierten Zustand liegt dann an der Basis des Transistrors T3 der Stromquellenschaltung eine Referenzspannung U1, die einen Strom i im Kollektor-Emitter-Kreis des Transistors T3 zur Folge hat. Die dadurch entstehenden Spannungsabfälle an den parallel zu den Basis-Kollektor-Strecken der Leistungstransistoren T1 und T2 liegenden Widerstände R1 und R2 bewirken eine Öffnung der Leistungstransistoren T1 und T2, so daß das Endgerät 3 von der Speiseschaltung 4 seine Stromversorgung erhält.

Liegt nun an der Steuerschaltung 5 ein Eingangssignal Ue, beispielsweise im 500Hz-Takt, so ändert sich in diesem Takt die Referenzspannung U1, da über den Transistor T4 der Steuerschaltung 5 der Widerstand R4 des Basisspannungsteilers in der Speiseschaltung 4 gegen Masse kurzgeschlossen wird. Mit der Änderung der Referenzspannung U1 ändert sich der Strom im Kollektor-Emitter-Kreis des Transistors T3 und damit die Spannungen an den Kollektor-Emitter-Strecken der Leistungstransistoren T1 und T2. Sind die zu den Basis-Kollektor-Strecken jeweils parallel liegenden Widerstände R1 und R2 gleich, so entsteht ein symmetrisches Ausgangssignal im Speisestromkreis im Takt des modulierenden Eingangssignals Ue der Steuerschaltung 5.

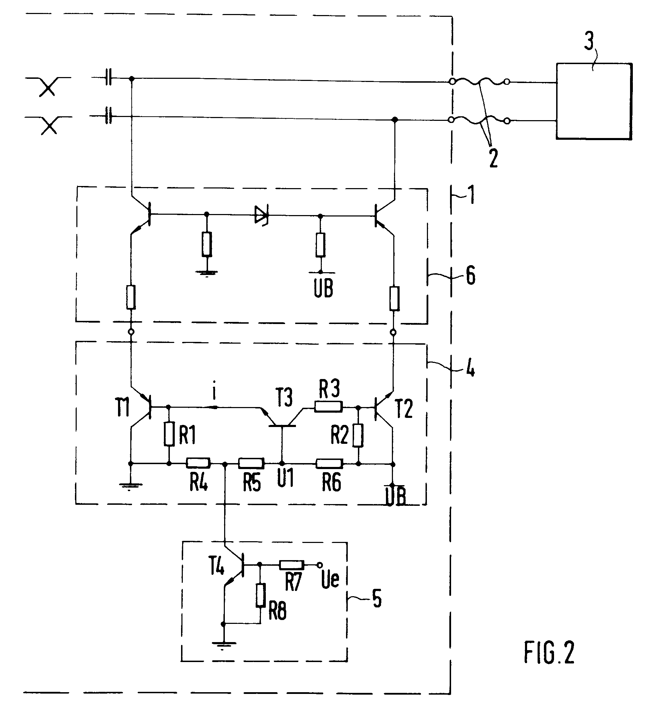

Bei Endgeräten 3 ohne interne Stromregelung ist es gemäß Fig. 2 möglich, in den Speisestromkreis eine Stromregelschaltung 6, die im wesentlichen aus zwei Transistoren, einer Z-Diode und drei Widerständen besteht, einzuschleifen, so daß auch diese Endgeräte leistungsarm gespeist und über die Steuerschaltung 5 auf gleiche Weise wie zuvor beschrieben gesteuert werden können.

In weiterer Ausgestaltung der Erfindung ist die Schaltungsanordnung vorteilhafterweise an der SO-Schnittstelle am ISDN-Teilnehmeranschluß einsetzbar. Die Speisung am SO-Bus 2, 21 erfolgt über einen Phantomkreis. Dabei ist die Speiseschaltung 4 mit den Mittelanzapfungen der anlagenseitigen Leitungsübertrager verbunden. Endgeräteseitig führen die Mittelanzapfungen der Leitungsübertrager zu einem Wandler 7 und einem Receiver 8. Über den Wandler 7 wird im Speisestromkreis ein dem Leistungsbedarf des Endgerätes 3 adäquater Strom eingestellt. Der Receiver 8 empfängt das 500 Hz-Signal, das beispielsweise zur Synchronisierung der Endgeräte dient. Die Erdsymmetrie der Stromversorgungsleitungen bewirkt, daß das modulierte Signal unbeeinflußt von Längsspannungen bleibt. Die im Speisestromkreis liegenden Leistungsstransistoren T1, T2 bilden für Längsspannungen, die im Falle von Störbeeinflussungen Werte von größer 60 V erreichen können, sehr niederohmige Impedanzen, so daß Aussteuerungen oder Übersteuerungen ausgeschlossen sind. Es ist möglich, in den Kollektorkreis der Leistungsstransistoren T1, T2 symmetrisch Vorwiderstände Rv1 und Rv2 anzuordnen, die zur Kurzschlußstrombegrenzung oder zur Identifikation des Schleifen- oder Kurzschlußstromes dienen können. Technisch vorteilhaft ist es, die Leistungstransistoren T1, T2 als Darlingtonstufen auszuführen, da dann die Widerstände der Stromquellenschaltung wegen der vernachlässigbaren Basisströme hochohmig ausgelegt werden können. Somit wird eine Schaltungsanordnung mit sehr niedrigem Leistungsumsatz angegeben, die universell einsetzbar ist.

## Patentansprüche

1. Verfahren zur Übertragung digitaler Signale über Teilnehmerleitungen (2) in Nachrichtenvermittlungssystemen, bei denen die Stromversorgung der Endgeräte (3) von einer Speiseschaltung (4) über diese Teilnehmerleitung erfolgt,
**dadurch gekennzeichnet,**
daß die Speisespannung der Speiseschaltung (4) über eine Steuerschaltung (5) mit einem digitalen Signal moduliert wird.

2. Schaltungsanordnung zur Durchführung des Verfahrens nach Anspruch 1,
**dadurch gekennzeichnet,**
daß im Speisestromkreis, bestehend aus Speiseschaltung (4), Teilnehmerleitung (2) und Endgerät (3), zwei Leistungstransistoren (T1, T2) unterschiedlichen Leitfähigkeitstyps liegen, zu deren Basis-Kollektor-Strecken jeweils ein Widerstand (R1, R2) parallel geschaltet ist, wobei diese Widerstände (R1, R2) im Kollektor-Emitter-Kreis eines weiteren Transistors (T3) liegen, dessen Basisspannungsteiler (R4, R5, R6), der an der Batteriespannung (UB) liegt, so aufgeteilt ist, daß zu einem Teil (R4) des Basisspannungsteilers die Kollektor-Emitter-Strecke eines Schalttransistors (T4) einer Steuerschaltung (5) parallel geschaltet ist und daß die Basis des Schalttransistors (T4) über einen Widerstand (R7) den Eingang (Ue) der Steuerschaltung (5) bildet.

3. Schaltungsanordnung nach Anspruch 2, dadurch gekennzeichnet, daß zwecks Einsatzes der Schaltungsanordnung bei Endgeräten ohne interne Stromregelung der Speiseschaltung (4) eine Stromregelschaltung (6) nachgeschaltet ist.

4. Schaltungsanordnung nach Anspruch 2, dadurch gekennzeichnet, daß zwecks Einsatzes der Schaltungsanordnung an der SO-Schnittstelle eines ISDN-Basisanschlusses die Emitter der Leistungstransistoren (T1, T2) jeweils mit einer Mittelanzapfung eines anlagenseitigen Leitungsübertragers des SO-Busses (2, 21) verbunden sind.

5. Schaltungsanordnung nach Anspruch 4, dadurch gekennzeichnet, daß den Emittern der Leistungstransistoren (T1, T2) Widerstände (Rv1, Rv2) vorgeschaltet sind.
